(19) **Europäisches Patentamt**
**European Patent Office**
**Office européen des brevets**

(11) **EP 3 492 338 B1**

(12) **EUROPEAN PATENT SPECIFICATION**

(45) Date of publication and mention
of the grant of the patent:
**06.11.2024 Bulletin 2024/45**

(51) International Patent Classification (IPC):
**B61L 23/04** (2006.01)    **B61L 27/20** (2022.01)
**B61L 27/70** (2022.01)

(21) Application number: **17204595.7**

(22) Date of filing: **30.11.2017**

(52) Cooperative Patent Classification (CPC):
**B61L 23/041; B61L 27/20; B61L 27/70**

(54) **AUTOMATIC REMOTE CONTROL OF A MOVING CONVEYANCE**

AUTOMATISCHE FERNSTEUERUNG EINES IN BEWEGUNG BEFINDLICHEN
BEFÖRDERUNGSMITTELS

COMMANDE AUTOMATIQUE À DISTANCE D'UN DISPOSITIF DE TRANSPORT MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.06.2019 Bulletin 2019/23**

(73) Proprietors:
• **Mitsubishi Electric R & D Centre Europe B.V.
1119 NS Schiphol Rijk (NL)**
Designated Contracting States:
**FR**
• **Mitsubishi Electric Corporation
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventor: **GRESSET, Nicolas
35708 Rennes Cedex 7 (FR)**

(74) Representative: **Cabinet Le Guen Maillet
3, impasse de la Vigie
CS 71840
35418 Saint-Malo Cedex (FR)**

(56) References cited:
**WO-A1-2015/092558    US-A1- 2004 117 073**

**Description**

TECHNICAL FIELD

The present invention generally relates to a method for automatic remote control of a moving conveyance travelling on a predefined path, such as railroads, in situations in which obstacles may be unpredictably encountered on said predefined path.

RELATED ART

Moving conveyances, such as trains, can travel on predefined paths, such as railroads, without being driven by a human operator. Such moving conveyances are automatically controlled using a remote decision-making unit, such as a server, with which the moving conveyances are wirelessly communicating.

Prior art document WO 2015/092 558 A1 discloses a method for remote control of a train using multiple sensors including image sensors. In this method, the distance to any detected obstacle is determined from the detected sensor data.

Prior art document US2004/0117073 A1 discloses a method for remote control of a train using time division multiple access methods for communication between the components of the system and allowing for allocation of time slots for communication between the train and the trackside.

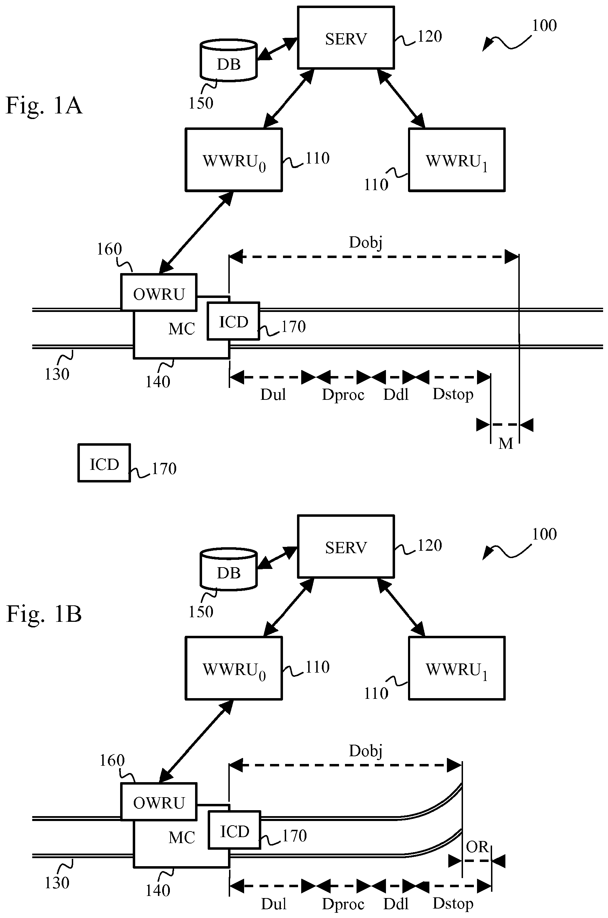

**Fig. 1A** schematically represents a system 100 for automatically controlling a moving conveyance MC 140 travelling on a predefined path 130, according to the prior art, in a first situation.

The aforementioned decision-making unit is a server SERV 120 connected to a plurality of wayside wireless radio units $WWRU_0$, $WWRU_1$ 110 located along the predefined path 130. The wayside wireless radio units $WWRU_0$, $WWRU_1$ 110 act as relays between the server SERV 120 and an on-board wireless radio unit OWRU 160 located in the moving conveyance MC 140. The on-board wireless radio unit OWRU 160 controls operation of the moving conveyance MC 140 according to instructions provided by the server SERV 120. The on-board wireless radio unit OWRU 160 is in charge of gathering data, more particularly position and speed of the moving conveyance MC 140 and of images of the predefined path ahead the moving conveyance MC 140, so as to enable the server SERV 120 to detect potential obstacles ahead the moving conveyance MC 140 and to enable consequently the server SERV 120 to instruct the moving conveyance MC 140 to stop before hitting the obstacle. The on-board wireless radio unit OWRU 160 obtains the images from an image-capturing device ICD 170, such as a camera or a camcorder, installed at the front of the moving conveyance MC 140. To perform obstacle detection, the server SERV 120 implements an object-detection algorithm for detecting presence of any object on the path ahead the moving conveyance MC 140, by analyzing the captured images.

The system 100 further includes a database DB 150 used to store a description of the predefined path 130. The database DB 150 is used by the server SERV 120 to determine at which speed the moving conveyance MC 140 is able to move on the predefined path 130 according to a position of said moving conveyance MC 140 on said predefined path 130. The database DB 150 further stores a braking model enabling determining within which distance the moving conveyance MC 140 is able to stop according to the speed of the moving conveyance MC 140 and potentially other parameters (weather conditions, slope of the predefined path when braking,...). The database DB 150 may further store complementary data relevant for controlling speed of the moving conveyance MC 140 on the predefined path 130.

From an instant T at which the on-board wireless radio unit OWRU 160 transmits one captured image toward the server SERV 120, a time period Tul lapses, during which the on-board wireless radio unit OWRU 160 transmits the captured image and complementary data (including at least speed and position of the moving conveyance MC 140) in uplink direction toward the server SERV 120. Transmission resources are allocated by the server SERV 120 to allow performing such uplink transmission and other resources are used for other communications (e.g. with other moving conveyances or shared with other communication systems). Then a time period Tproc lapses, during which the server SERV 120 processes the captured image and the complementary data including at least speed and position of the moving conveyance MC 140) in order to detect potential presence of an object on the path ahead the moving conveyance MC 140. Then a time period Tdl lapses, during which the server SERV 120 transmits a response in downlink direction toward the on-board wireless radio unit OWRU 160, the response indicating whether or not the moving conveyance MC 140 shall stop. This process is periodically performed, according to a fixed period Tic, so as to maintain continuously a safety distance ahead the moving conveyance MC 140. The fixed period Tic thus depends on the maximum speed of the moving conveyance MC 140. It thus means that new images are available and transmitted each and every end of the fixed period Tic. It has to be noted that any captured image is thus transmitted without waiting that the response from the server SERV 120 about the analysis of the previous image(s) be received.

Let's consider herein that Dul is a distance travelled by the moving conveyance MC 140 during the time period Tul, that Dproc is a distance travelled by the moving conveyance MC 140 during the time period Tproc, that Ddl is a distance travelled by the moving conveyance MC 140 during the time period Tdl, that Dic is a distance travelled by the moving conveyance MC 140 during the time period Tic, and that Dstop is a distance travelled by the moving conveyance MC 140 during a time period Tstop needed by the moving conveyance MC 140 to effectively stop in view of its actual speed from the instant at which the stop instructions are received.

Let's further consider herein that Dobj is a distance ahead considered as clear from any obstacle presence. The distance Dobj represents a part of the path ahead that has already been checked by the server SERV 120 and that has been considered by the server SERV 120 as clear from any obstacle presence by its object-detection algorithm. The distance Dobj is defined by the field of view of the image-capturing device ICD 170 that captures the images processed by the server SERV 120, and more particularly the depth of field.

The field of view depends on predefined characteristics of image-capturing technology implemented by the image-capturing device ICD 170. In the case of a LIDAR ("Light Detection And Ranging"), scanned environment can be reconstructed in three dimensions and distance estimation with the furthest positions in the angular field of interest can thus be obtained, which defines the distance Dobj. In the case of a camera, lens system abacus provides the depth of field, which defines the distance Dobj.

The field of view further depends on actual weather conditions (rain and fog are known to reduce the field of view) at the position where the moving conveyance is located on the predefined path 130.

The distance Dobj thus decreases over time, until a new image is processed by the server SERV 120. The distance Dobj can be expressed as follows:

$$Dobj = Dfov - Dlast$$

wherein Dfov represents a distance covered by the aforementioned field of view determined for the last processed image and Dlast represents a distance travelled by the moving conveyance MC 140 since the instant at which the last processed image has been captured.

The distance Dobj shall be such that a sum of the distances Dul, Dproc, Ddl and Dstop for the next image is less than the distance Dobj. In other words, a (positive and) non-null margin M shall exist between the sum of said distances Dul, Dproc, Ddl and Dstop and said distance Dobj, since the distance Dobj is a limit beyond which the system 100 does not know whether or not an obstacle is present on the path ahead.

**Fig. 1B** schematically represents the system 100 for automatically controlling the moving conveyance MC 140 travelling on the predefined path 130, according to the prior art, in a second situation. In this second situation, the path ahead the moving conveyance MC 140 makes a turn. The maximum value of the distance Dobj is then shortened compared with the first situation depicted in Fig. 1A, since the aforementioned field of view is reduced due to the turn. The risk is thus that an overrun OR may theoretically appear as shown in Fig. 1B, if the moving conveyance MC 140 maintains its speed. In such a case, the moving conveyance MC 140 is requested to slow down so that no overrun OR occur, since the distance Dstop needed to stop the moving conveyance MC 140 is consequently reduced. But this behaviour is a waste of time, and therefore a loss of performance, when after all there was no obstacle ahead.

It is therefore desirable to provide a solution that allows overcoming the aforementioned drawback of the prior art, and more particularly reducing travelling time of a moving conveyance automatically controlled by a remote server without taking risks of collision in case of potential presence of an obstacle on a predefined path on which said moving conveyance travels.

It is further desirable to provide a solution that is simple and cost-effective.

SUMMARY OF THE INVENTION

To that end, the present invention concerns a method for a method of automatic remote control of a moving conveyance travelling on a predefined path, the moving conveyance including an on-board wireless radio unit and an image-capturing device installed on the moving conveyance so as to capture images of the predefined path ahead the moving conveyance, wherein a server remotely controlling the moving conveyance performs: receiving from the on-board wireless radio unit images captured by the image-capturing device; analyzing the received images so as to detect presence of obstacle ahead the moving conveyance on the predefined path; and instructing the on-board wireless radio unit to stop the moving conveyance in case of obstacle presence detection, the method is such that the server further performs: determining a distance Dfov for each received image, wherein Dfov represents a distance ahead considered as clear from any obstacle presence; and increasing quantity of uplink transmission resources allocated for allowing the on-board wireless radio unit to transmit the images toward the server, when a decrease of the distance Dfov is determined. Thus, thanks the uplink resources allocation adaptation with respect to evolution of the distance Dfov, the speed of the moving conveyance does not need to be reduced. Hence the travelling time of the moving conveyance automatically controlled by the server is reduced, without taking risks of collision in case of potential presence of an obstacle ahead on the predefined path.

According to a particular embodiment, the server increases the quantity of uplink transmission resources allocated for allowing the on-board wireless radio unit to transmit the images toward the server, by quoting extra uplink transmission resources from a pool of uplink transmission resources, and the pool of uplink transmission resources is shared by on-board wireless radio units included in respective moving conveyances managed by the server and travelling in same radio coverage. Thus, a simple and cost-effective solution is provided.

According to a particular embodiment, the server instructs the on-board wireless radio unit to decrease speed of the moving conveyance when the server fails increasing the quantity of uplink transmission resources. Thus, collision avoidance is maintained although difficulties in uplink transmission resources allocation are encountered.

According to a particular embodiment, the on-board wireless radio unit transmits actual speed S of the moving conveyance to the server as a complement to the captured images, wherein the server allocates the quantity of uplink transmission resources for allowing the on-board wireless radio unit to transmit the images toward the server so as to fulfill the following relationship:

$$Tul < ((Dfov - Dstop) / S) - Tic - Tproc - Tdl$$

wherein Tul is a period to transmit one said image from the on-board wireless radio unit to the server, Dfov is the field of view, Dstop is a distance to stop the moving conveyance in view of its actual speed S, Tic is a fixed period between successive captures of images by the image-capturing device, Tproc is an upper bounded period for the server to process one image to detect obstacle presence and Tdl is an upper bounded period to transmit instructions message from the server to the on-board wireless radio unit, thus, uplink resources allocation can easily be computed and adapted.

According to a particular embodiment, the server further performs: decreasing quantity of uplink transmission resources allocated for allowing the on-board wireless radio unit to transmit the images toward the server, when an increase of the distance Dfov is determined, under a constraint that the relationship:

$$Tul < ((Dfov - Dstop) / S) - Tic - Tproc - Tdl$$

remains fulfilled. Thus, usage of uplink resources is efficient.

According to a particular embodiment, the server evaluates the distance Dstop in view of the actual speed S of the moving conveyance using a braking model stored in a database. Thus, the distance Dstop and consequently the uplink resources allocation can be easily computed and adjusted to the moving conveyance's speed.

According to a particular embodiment, the on-board wireless radio unit transmits to the server actual position of the moving conveyance as a complement to the captured images, and the distance Dfov depends on predefined characteristics of image-capturing technology implemented by the image-capturing device, and further on actual weather conditions at said position of the moving conveyance. Thus, the uplink resources allocation, and consequently the speed of the moving conveyance, are dynamically adapted to the weather conditions without requiring external assistance.

According to a particular embodiment, the server obtains indications of the actual weather conditions from a weather monitoring and forecasting service or, via the on-board wireless radio unit, from a weather monitoring station installed on-board the moving conveyance. Thus, the uplink resources allocation, and consequently the speed of the moving conveyance, are dynamically adapted to the weather conditions in an easy way.

According to a particular embodiment, the on-board wireless radio unit transmits to the server actual position of the moving conveyance as a complement to the captured images, wherein the distance Dfov depends on predefined characteristics of image-capturing technology implemented by the image-capturing device, and further on trajectory information about the predefined path for a portion thereof ahead the moving conveyance, and the server obtains indications of the trajectory of the predefined path ahead the moving conveyance by interrogating a database storing a description of the predefined path. Thus, the uplink resources allocation, and consequently the speed of the moving conveyance, are dynamically adapted to varying surrounding items along the predefined path.

The present invention also concerns a server implementing an automatic remote control of a moving conveyance travelling on a predefined path, the moving conveyance including an on-board wireless radio unit and an image-capturing device installed on the moving conveyance so as to capture images of the predefined path ahead the moving conveyance, wherein the server implements: means for receiving from the on-board wireless radio unit images captured by the image-capturing device; means for analyzing the received images so as to detect presence of obstacle ahead the moving conveyance on the predefined path; and means for instructing the on-board wireless radio unit to stop the moving conveyance in case of obstacle presence detection. In addition, the server further implements: means for determining distance Dfov from each of the received images, wherein Dfov represents a distance ahead considered as clear from any obstacle presence; and means for increasing quantity of uplink transmission resources allocated for allowing the on-board wireless radio unit to transmit the images toward the server, when a decrease of the distance Dfov is determined.

The present invention also concerns a computer program that can be downloaded from a communication network and/or stored on a non-transitory information storage medium that can be read by a processing device such as a microprocessor. This computer program comprises instructions for causing implementation of the aforementioned method, when said program is run by the processing device. The present invention also concerns a non-transitory information storage medium, storing such a computer program.

BRIEF DESCRIPTION OF THE DRAWINGS

The characteristics of the invention will emerge more clearly from a reading of the following description of at least one example of embodiment, said description being produced with reference to the accompanying drawings, among which:

Fig. 1A schematically represents a system for automatically controlling a moving conveyance travelling on a predefined path, according to the prior art, in a first situation;
Fig. 1B schematically represents the system for automatically controlling the moving conveyance travelling on the predefined path, according to the prior art, in a second situation;
Fig. 2 schematically represents an algorithm for wirelessly transmitting relevant data from a wireless radio unit on-board a moving conveyance so as to enable a server to detect presence of potential obstacles on the predefined path, according to at least one embodiment of the present invention;
Fig. 3 schematically represents an algorithm for processing the data received from a wireless radio unit on-board the moving conveyance so as to provide relevant instructions when an obstacle is present on the predefined path, according to at least one embodiment of the present invention;
Fig. 4 schematically represents an algorithm for managing uplink transmission resources for transmitting the relevant data from the wireless radio unit on-board the moving conveyance so as to enable the server to detect presence of potential obstacles on the predefined path, according to at least one embodiment of the present invention;
Fig. 5 schematically represents an architecture of a processing device of the system; and
Fig. 6 schematically represents the system for automatically controlling the moving conveyance travelling on the predefined path, according to the present invention, in the second situation.

DETAILED DESCRIPTION OF AT LEAST ONE EMBODIMENT

The context of the present invention is identical to the context described in the introductive part of the present document. Namely, the server SERV 120 is connected to a plurality of wayside wireless radio units $WWRU_0$, $WWRU_1$ 110 located along the predefined path 130. The wayside wireless radio units $WWRU_0$, $WWRU_1$ 110 act as relays between the server SERV 120 and the on-board wireless radio unit OWRU 160 located in the moving conveyance MC 140. The on-board wireless radio unit OWRU 160 controls operation of the moving conveyance MC 140 according to instructions provided by the server SERV 120. The context described hereafter further comprises the database DB 150. The database DB 150 may be connected to the server SERV 120, using a wired, wireless or optical link, or may be included in the server SERV 120.

For example, the wayside wireless radio units $WWRU_0$, $WWRU_1$ 110 are access points of a telecommunication system, such as an LTE ("Long Term Evolution") telecommunication system or the like. For example, the server SERV 120 is connected to the wayside wireless radio units $WWRU_0$, $WWRU_1$ 110 using copper wires or optical links. The moving conveyance MC 140 is for example a train and the predefined path 130 is a railroad.

It has to be noted that equivalently the on-board wireless radio unit OWRU 160 can communicate directly with the server SERV 120 using an appropriate wireless communication technology ensuring that the on-board wireless radio unit OWRU 160 remains, in view of the predefined path 130 and geographical location of the server SERV 120, within the radio coverage of the server SERV 120 and vice versa.

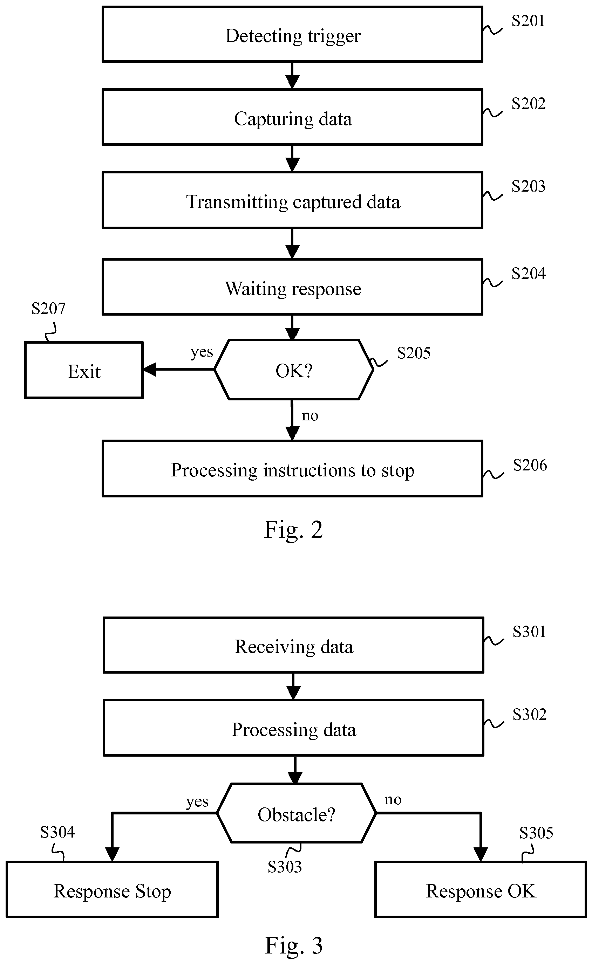

**Fig. 2** schematically represents an algorithm for wirelessly transmitting relevant data from the on-board wireless radio unit OWRU 160 so as to enable the server SERV 120 to detect presence of potential obstacles on the predefined path 130, according to at least one embodiment of the present invention. The algorithm of Fig. 2 is performed by the on-board wireless radio unit OWRU 160.

In a step S201, the on-board wireless radio unit OWRU 160 detects a trigger. The trigger indicates that a new image captured by the image-capturing device ICD 170 is available. In other words, the trigger indicates that the fixed period Tic lapsed since the last capture of image by the image-capturing device ICD 170.

In a step S202, the on-board wireless radio unit OWRU 160 obtains the newly captured image from the image-capturing device ICD 170. It has to be noted that the image-capturing device ICD 170 can be connected to the on-board wireless radio unit OWRU 160 or integrated therein.

In a step S203, the on-board wireless radio unit OWRU 160 transmits the obtained newly captured image toward the server SERV 120. The wayside wireless radio units WWRU$_0$, WWRU$_1$ 110 may act as relays to provide the newly captured image toward the server SERV 120.

The on-board wireless radio unit OWRU 160 transmits complementary data in the step S203. The complementary data are at least information representative of the actual position of the moving conveyance MC 140 on the predefined path 130 and the actual speed of the moving conveyance MC 140. The actual position and/or speed of the moving conveyance MC 140 may be determined by the on-board wireless radio unit OWRU 160 thanks to a GPS (Global Positioning System) unit included therein or connected thereto. In a variant, the on-board wireless radio unit OWRU 160 obtains the speed of the moving conveyance MC 140 from a tachymeter connected thereto. In another variant, the actual position of the moving conveyance MC 140 is obtained using a beacon detector adapted for detecting beacons placed on or along the predefined path 130. In this case, the actual position of the moving conveyance MC 140 is computed by extrapolation according to the position of the last detected beacon, an instant at which said beacon has been detected, the actual instant at which the actual position of the moving conveyance MC 140 has to be determined and the speed of the moving conveyance MC 140.

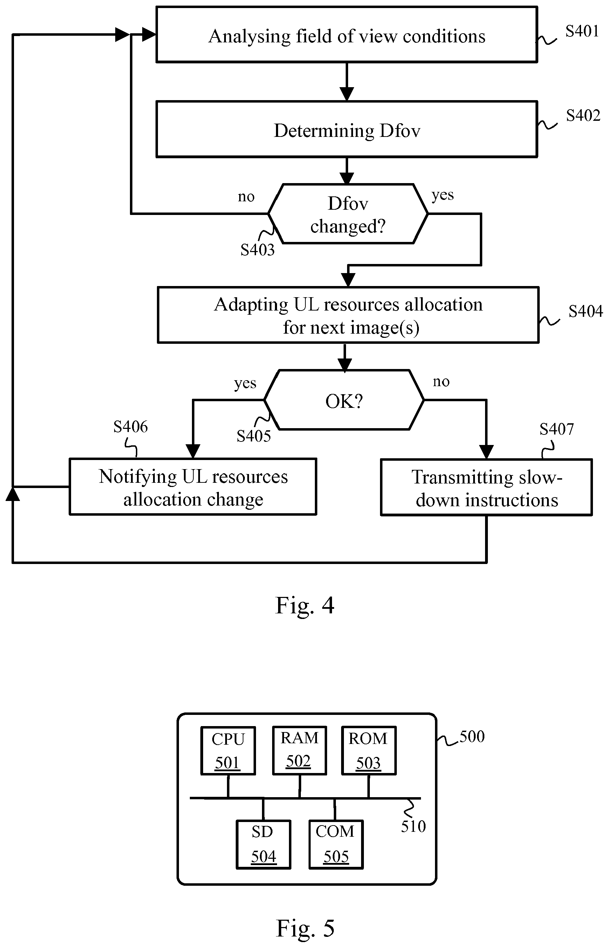

The transmission performed in the step S203 is made using uplink transmission resources allocated by the server 120. First of all, variability of the quantity of uplink transmission resources used for performing the transmissions of the step S203 can be due to variations in uplink transmission channel conditions, as usually done in wireless transmission systems, by relying for example on CSI (Channel State Information) measurements performed by the wayside wireless radio units WWRU$_0$, WWRU$_1$ 110 while the moving conveyance MC 140 is moving on the predefined path 130 and communicated and/or on a fingerprint database collecting CSI measurements made during previous journeys of moving conveyances on said predefined path 130. However, as described hereafter with respect to Fig. 4, the quantity of transmission resources allocated by the server SERV 120 to allow performing said transmissions further depends on the distance Dfov and further on the speed of the moving conveyance MC 140.

In a step S204, the on-board wireless radio unit OWRU 160 waits for a response from the server SERV 120. When the on-board wireless radio unit OWRU 160 receives the response from the server SERV 120, a step S205 is performed.

The transmission of said response is made using downlink transmission resources allocated by the server 120. However, the size of the response is negligible in view of the size of the data transmitted in the step S203, since the response only concerns instructions whether or not to stop the moving conveyance MC 140, while the data transmitted in the step S203 comprise an image, which can consist of several megabytes depending on image resolution and encoding format. Therefore, variability of the quantity of downlink transmission resources used for transmitting the response is only due to variations in downlink transmission channel conditions, which means that the period Tdl can easily be upper bounded.

In the step S205, the on-board wireless radio unit OWRU 160 checks whether or not the received response indicates that the path ahead is clear from any presence of obstacle. If the received response indicates that the path ahead is clear from any presence of obstacle, the algorithm of Fig. 2 ends in a step S207; otherwise, a step S206 is performed.

In the step S206, the on-board wireless radio unit OWRU 160 processes instructions to stop the moving conveyance MC 140. The on-board wireless radio unit OWRU 160 instructs a controller of operations of the moving conveyance MC 140 that the moving conveyance MC 140 shall break to stop. The moving conveyance MC 140 would then be allowed to restart its travel ahead on the predefined path upon receiving corresponding instructions from the server SERV 120. Indeed, once the obstacle is removed, the image analysis performed by the server SERV 120 would result in detecting that the predefined path ahead is clear from any presence of obstacle. The server SERV 120 would then transmit instructions to the on-board wireless radio unit OWRU 160 requesting restart of the moving conveyance MC 140. This can be combined with other safety measures. This aspect is not detailed herein since it is already widely addressed in the prior art of automatic remote control of moving conveyances. Execution of the step S206 ends the algorithm of Fig. 2.

The algorithm of Fig. 2 is repeated each time one trigger indicates that the fixed period Tic lapsed since the last capture of image(s) by the image-capturing device ICD 170, in order to ensure that any presence of obstacle on the predefined path is detected on time.

**Fig. 3** schematically represents an algorithm for processing the data received from the on-board wireless radio unit OWRU 160 so as to provide relevant instructions when an obstacle is present on the predefined path 130, according to at least one embodiment of the present invention. The algorithm of Fig. 3 is implemented by the server SERV 120, each time the server SERV 120 receives data as transmitted by the on-board wireless radio unit OWRU 160 in the step S203.

In a step S301, the server SERV 120 receives the data transmitted by the on-board wireless radio unit OWRU 160 in the step S203.

In a step S302, the server SERV 120 processes the data received in the step S301. More particularly, the server SERV 130 executes the object-detection algorithm onto at least one image received in the step S301, in order to detect whether or not there is any obstacle present in the field of view ahead the moving conveyance MC 140. According to a first example, the object-detection algorithm performs as disclosed in the document *"SSD: Single Shot MultiBox Detector"*, Wei Liu et al, European Conference on Computer Vision (ECCV), 2016. According to a second example, the object-detection algorithm performs as disclosed in the document "Fast R-CNN", Ross Girshick, International Conference on Computer Vision, 2015, wherein R-CNN stands for Region-based Convolutional Network. According to a third example, the object-detection algorithm performs as disclosed in the document "You Only Look Once: Unified, Real-Time Object Detection", Joseph Redmon et al, IEEE Conference on Computer Vision and Pattern Recognition (CVPR), 2016.

In a step S303, the server SERV 120 checks whether or not execution of the object-detection algorithm results in detecting presence of an obstacle ahead the moving conveyance MC 140. If such a obstacle has been detected, a step S304 is performed; otherwise, a step S305 is performed.

In the step S304, the server SERV 120 transmits a downlink response to the on-board wireless radio unit OWRU 160 in which the server SERV 120 includes instructions to stop the moving conveyance MC 140. The algorithm of Fig. 3 then ends.

In the step S305, the server SERV 120 transmits a downlink response to the on-board wireless radio unit OWRU 160 in which the server SERV 120 indicates that the predefined path 130 ahead the moving conveyance MC 140 is clear from any obstacle presence. The moving conveyance MC 140 is thus allowed to continue its travel on the predefined path 130.

**Fig. 4** schematically represents an algorithm for managing uplink transmission resources for transmitting the relevant data from the on-board wireless radio unit OWRU 160 so as to enable the server SERV 120 to detect presence of potential obstacles on the predefined path 130, according to at least one embodiment of the present invention. The algorithm of Fig. 4 is implemented by the server SERV 120 once a new image has been processed by execution of the algorithm of Fig. 3 and that no obstacle has been detected in said new image.

In a step S401, the server SERV 120 performs an analysis of the field of view conditions of said new image. As far as the processing of the new image showed that no obstacle is present ahead, the field of view of said new image defines the boundary beyond which it is not certain that no obstacle is present. In other words, the field of view of the new image defines the distance Dobj for the next image. In other words, before expiration of the time period Tic since the transmission of said new image by the on-board wireless radio unit OWRU 160 toward the server SERV 120, decision about uplink transmission resources allocation shall have been made and applied by the server SERV 120.

Determining the field of view conditions may include determining the field of view by analysis of the new image. For example, by knowing the characteristics of the lens system, such as the aperture, it is possible to know the depth of the field of view from matching tables.

Determining the field of view conditions may include determining weather conditions at the position of the moving conveyance MC 140. The field of view may indeed be different according to sunny, rainy, snowy or foggy weather conditions. The server SERV 120 may obtain indications of the weather conditions from a weather monitoring and forecasting service on a weather monitoring and forecasting server to which the server SERV 120 is connected, for example provided by the Japan Meteorological Agency. In a variant, the server SERV 120 may obtain indications of the weather conditions from a weather monitoring station installed on-board the moving conveyance MC 140, via the on-board wireless radio unit OWRU 160.

The field of view conditions may include trajectory information about the predefined path 130 for a portion thereof ahead the moving conveyance MC 140. The server SERV 120 may obtain indications of the trajectory of the predefined path 130 ahead the moving conveyance MC 140 by interrogating the database DB 150. The server SERV 120 is thus able to know from the database DB 150 if there is an upcoming turn, what is the radius of said turn in this case, or if there is an item (such as a forest or a building) obstructing partly the field of view which is located along the predefined path 130, etc.

In a step S402, the server SERV 120 determines the distance Dfov from the analysis of the field of view conditions performed in the step S401, *i.e.* the distance Dfov which relates to the new image (and which defines a safety travelling zone for the next image so that, if an obstacle is detected in said next image, the moving conveyance MC 140 can be stopped).

In a step S403, the server SERV 120 checks whether or not the distance Dfov changed compared with previous analysis of the field of view conditions (i.e. analysis for the image immediately preceding said new image). When the distance Dfov changed (compared with the immediately preceding image), a step S404 is performed; otherwise, the step S401 is repeated. The server SERV 120 may wait that the moving conveyance MC 140 has travelled a predefined distance or that a predefined time period has elapsed before repeating the step S401.

In the step S404, the server SERV 120 attempts adapting the uplink transmission resources allocation that allow the on-board wireless radio unit OWRU 160 to transmit the data, including the images that are then analyzed by the server SERV 120 for obstacle detection, in the step S203. The uplink transmission resources allocation is adapted so as to be adequately defined before the instant at which the on-board wireless radio unit OWRU 160 would have to transmit the next image). It is reminded that variability of the quantity of uplink transmission resources used for performing the transmissions of the step S203 can further be due to variations in uplink transmission channel conditions, and that adaptation of the uplink transmission resources allocation discussed here is complementary to the adaptation of the uplink transmission resources needed by the variations in uplink transmission channel conditions.

In the case where the distance Dfov decreased (compared with the immediately preceding image), the server SERV 120 attempts increasing the uplink transmission resources allocation (for at least the next image). Extra uplink transmission resources may be quoted from a backup pool of uplink transmission resources and/or the server SERV 120 may release uplink transmission resources from other communications having a lower priority. For example, the backup pool of uplink transmission resources is a pool of uplink transmission resources shared between on-board wireless radio units located in respective moving conveyances managed by the server SERV 120 and travelling in the same radio coverage (which means that communications with said on-board wireless radio units may interfere).

The transmission of said data (including next image) by the on-board wireless radio unit OWRU 160 are consequently faster due to a higher throughput. As a consequence, the period Tul is shortened for transmitting said next image, and equivalently the distance Dul is shortened. At the same speed of the moving conveyance MC 140, collision avoidance is maintained although the distance Dfov has decreased (compared with the immediately preceding image).

In view of what precedes, in the worst case:

$$Dobj = Dfov - Dic$$

and

$$Dobj = Dul + Dproc + Ddl + Dstop + M$$

wherein Dfov is computed for said new image and the other parameters relate to the next image.

Considering that M > 0, the uplink transmission resources allocation shall be performed such that:

$$Dul < Dfov - Dic - Dproc - Ddl - Dstop$$

which can be transposed in the time domain as follows:

$$Tul < (Dfov - Dic - Dproc - Ddl - Dstop) / S$$

or equivalently:

$$Tul < ((Dfov - Dstop) / S) - Tic - Tproc - Tdl$$

As already mentioned, Tic is fixed and Tdl is upper bounded. Tproc can be upper bounded as well since it consists in image analysis. Dstop can be evaluated in view of the speed S of the moving conveyance MC 140 using a braking model stored in the database DB 150.

It is assumed here that between the instant at which the new image is taken and the instant at which the on-board wireless radio unit OWRU 160 receives a downlink message including instructions to stop the moving conveyance MC 140 (*i.e.* after a time period Tic + Tul + Tproc + Tdl), the speed S of the moving conveyance MC 140 has not changed. If the moving conveyance MC 140 has accelerated or decelerated, this can be taken into account to get a more accurate version of the distances Dic, Dproc, Ddl, and also Dstop by taking into account the speed S of the moving conveyance MC 140 at the time the on-board wireless radio unit OWRU 160 is expected to receive said downlink message including instructions to stop the moving conveyance MC 140.

Preferably, in the case where the distance Dfov increased, the server SERV 120 decreases the uplink transmission resources allocation. The extra uplink transmission resources can thus be put in the backup pool of uplink transmission resources or used by other uplink communications. Decreasing the uplink transmission resources allocation is however done under a constraint that the margin M is maintained (positive and) non-null.

In a step S405, the server SERV 120 checks whether or not the attempt of adapting the uplink transmission resources allocation performed in the step S404 is successful. For instance, the backup pool of uplink transmission resources may be empty and the server SERV 120 may not have found a solution to release uplink transmission resources from other communications, which led to a situation in which the server SERV 120 may not have been able to obtain extra resources for the uplink transmissions from the on-board wireless radio unit OWRU 160. When the attempt of adapting the uplink transmission resources allocation performed in the step S404 is successful, a step S406 is performed; otherwise, a step S407 is performed.

In the step S406, the server SERV 120 notifies the on-board wireless radio unit OWRU 160 that the uplink transmission resources allocation has changed. The server SERV 120 transmits to the on-board wireless radio unit OWRU 160 information representative of the uplink transmission resources that are henceforth allocated for performing the transmissions of the step S203. The on-board wireless radio unit OWRU 160 is then supposed to use said uplink transmission resources for performing the transmissions of the step S203 (including the next image).

In the step S407, the server SERV 120 instructs the on-board wireless radio unit OWRU 160 to slow-down the moving conveyance MC 140. This aspect is not further detailed since it matches what is actually done in the prior art (see introductive part of the present document). The server SERV 120 does so since no extra uplink transmission resources could be found to reduce the time Tul.

Once the step S406 or the step S407 is performed, the step S401 is repeated. The server SERV 120 may wait that the moving conveyance MC 140 has travelled a predefined distance or that a predefined time period has elapsed before repeating the step S401.

By applying the algorithm of Fig. 4, the server SERV 120 gives extra uplink transmission resources to the on-board wireless radio unit OWRU 160 when the distance Dfov decreases, in order to reduce the period Tul and thus allow the moving conveyance MC 140 to maintain its speed, without taking risks of collision with an obstacle ahead.

**Fig. 5** schematically represents an example hardware architecture of a processing device of the system. Such a processing device can be included in the on-board wireless radio unit OWRU 160 in order to implement the algorithm and steps described hereinbefore with respect to the on-board wireless radio unit OWRU 160. Such a processing device can also be included in the server SERV 120 in order to implement the algorithms and steps described hereinbefore with respect to the server SERV 120. It can be noted that the wayside wireless radio units $WWRU_0$, $WWRU_1$ 110 may be built with the same hardware architecture.

According to the shown example of hardware architecture, the processing device 500 comprises at least the following components interconnected by a communications bus 510: a processor, microprocessor, microcontroller or CPU (Central Processing Unit) 501; a RAM (Random-Access Memory) 502; a ROM (Read-Only Memory) 503; an HDD (Hard-Disk Drive) or an SD (Secure Digital) card reader 504, or any other device adapted to read information stored on non-transitory information storage medium; a communication interface COM 505 or a set of communication interfaces.

When the hardware architecture concerns the server SERV 120, the communication interface COM 505 enables the server SERV 120 to communicate with the wayside wireless radio units $WWRU_0$, $WWRU_1$ 110. In a variant, the communication interface COM 505 enables the server SERV 120 to wirelessly communicate directly with the on-board wireless radio unit OWRU 160.

When the hardware architecture concerns the on-board wireless radio unit OWRU 160, the communication interface COM 505 enables the on-board wireless radio unit OWRU 160 to wirelessly communicate with the wayside wireless radio units $WWRU_0$, $WWRU_1$ 110. In a variant, the communication interface COM 505 enables to the on-board wireless radio unit OWRU 160 to wirelessly communicate directly with the server SERV 120.

When the hardware architecture concerns the wayside wireless radio units $WWRU_0$, $WWRU_1$ 110, the set of communication interfaces COM 505 enables the wayside wireless radio units $WWRU_0$, $WWRU_1$ 110 to communicate with the server SERV 120 on one hand and to wirelessly communicate with the on-board wireless radio unit OWRU 160 on the other hand.

CPU 501 is capable of executing instructions loaded into RAM 502 from ROM 503 or from an external memory, such as an SD card via the SD card reader 504. After the processing device 500 has been powered on, CPU 501 is capable of reading instructions from RAM 502 and executing these instructions. The instructions form one computer program that causes CPU 201 to perform some or all of the steps of the algorithms described hereinbefore.

Consequently, it is understood that any and all steps of the algorithm described herein may be implemented in software by execution of a set of instructions or program by a programmable computing machine, such as a PC (Personal Computer), a DSP (Digital Signal Processor) or a microcontroller; or else implemented in hardware by a machine or a dedicated chip or chipset, such as an FPGA (Field-Programmable Gate Array) or an ASIC (Application-Specific Integrated Circuit). In general, the server SERV 120 and the on-board wireless radio unit OWRU 160 comprise processing electronics circuitry configured for implementing the relevant steps as described herein with respect to the device in question.

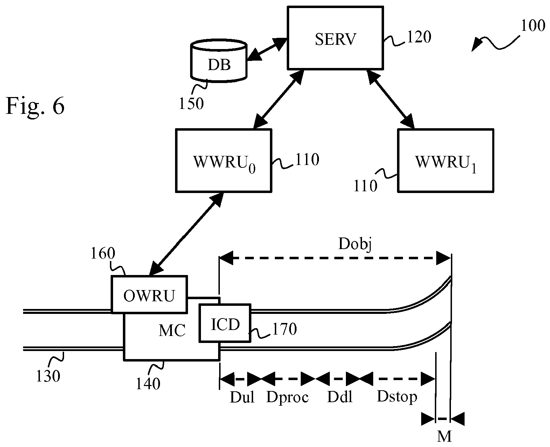

**Fig. 6** schematically represents the system 100 for automatically controlling the moving conveyance MC 140 travelling on the predefined path 130, according to the present invention, in the second situation that has already been described, according to the prior art, with respect to Fig. 1B.

Since the uplink transmission resources increase has appropriately decreased the period Tul and consequently the distance Dul compared with Fig. 1B, the sum of the distances Dul, Dproc, Ddl and Dstop is equal to the distance Dobj minus the margin M, wherein the margin M is (positive and) non-null. The moving conveyance MC 140 can thus travel faster than compared with Fig. 1B, without involving more risks of collision than compared with Fig. 1B.

**Claims**

1. A method of automatic remote control of a moving conveyance (140) travelling on a predefined path (130), the moving conveyance (140) including an on-board wireless radio unit (160) and an image-capturing device (170) installed on the moving conveyance (140) so as to capture images of the predefined path (130) ahead the moving conveyance (140), wherein a server (120) remotely controlling the moving conveyance (140) performs:

   - receiving (S301) from the on-board wireless radio unit (160) images captured by the image-capturing device (170);
   - analyzing (S302) the received images so as to detect presence of obstacle ahead the moving conveyance (140) on the predefined path (130); and
   - instructing (S304) the on-board wireless radio unit (160) to stop the moving conveyance (140) in case of obstacle presence detection;

   **characterized in that** the server (120) further performs for each received image:

   - determining (S402) a distance Dfov from the received image, wherein Dfov represents a distance ahead considered as clear from any obstacle presence ; and
   - increasing (S404) quantity of uplink transmission resources allocated for allowing the on-board wireless radio unit (160) to transmit the images toward the server (120), when a decrease of said distance Dfov is determined.

2. The method according to claim 1, wherein the server (120) increases the quantity of uplink transmission resources allocated for allowing the on-board wireless radio unit (160) to transmit the images toward the server (120), by quoting extra uplink transmission resources from a pool of uplink transmission resources, wherein the pool of uplink transmission resources is shared by on-board wireless radio units (160) included in respective moving conveyances managed by the server (120) and travelling in same radio coverage.

3. The method according to claim 1 or 2, wherein the server (120) instructs (S407) the on-board wireless radio unit (160) to decrease speed of the moving conveyance (140) when the server (120) fails increasing the quantity of uplink transmission resources.

4. The method according to claim 1 to 3, wherein the on-board wireless radio unit (160) transmits actual speed S of the moving conveyance (140) to the server (120) as a complement to the captured images, wherein the server (120) allocates the quantity of uplink transmission resources for allowing the on-board wireless radio unit (160) to transmit the images toward the server (120) so as to fulfill the following relationship:

$$Tul < ((Dfov - Dstop) / S) - Tic - Tproc - Tdl$$

   wherein Tul is a period to transmit one said image from the on-board wireless radio unit (160) to the server (120), Dstop is a distance to stop the moving conveyance (140) in view of its actual speed S, Tic is a fixed period between successive captures of images by the image-capturing device (170), Tproc is an upper bounded period for the server (120) to process one image to detect obstacle presence and Tdl is an upper bounded period to transmit instructions message from the server (120) to the on-board wireless radio unit (160).

5. The method according to claim 4, wherein the server (120) further performs:

   - decreasing quantity of uplink transmission resources allocated for allowing the on-board wireless radio unit (160) to transmit the images toward the server (120), when an increase of the distance Dfov is determined, under a constraint that the relationship:

$$Tul < ((Dfov - Dstop) / S) - Tic - Tproc - Tdl$$

remains fulfilled.

6. The method according to claim 4 or 5, wherein the server (120) evaluates the distance Dstop in view of the actual speed S of the moving conveyance (140) using a breaking model stored in a database (150).

7. The method according to any one of claims 1 to 6, wherein the on-board wireless radio unit (160) transmits to the server (120) actual position of the moving conveyance (140) as a complement to the captured images, wherein the distance Dfov depends on predefined characteristics of image-capturing technology implemented by the image-capturing device (170), and further on actual weather conditions at said position of the moving conveyance (140).

8. The method according to claim 7, wherein the server obtains indications of the actual weather conditions from a weather monitoring and forecasting service or, via the on-board wireless radio unit (160), from a weather monitoring station installed on-board the moving conveyance (140).

9. The method according to any one of claims 1 to 8, wherein the on-board wireless radio unit (160) transmits to the server (120) actual position of the moving conveyance (140) as a complement to the captured images, wherein the distance Dfov depends on predefined characteristics of image-capturing technology implemented by the image-capturing device (170), and further on trajectory information about the predefined path (130) for a portion thereof ahead the moving conveyance (140), and wherein the server (120) obtains indications of the trajectory of the predefined path (130) ahead the moving conveyance by interrogating a database (150) storing a description of the predefined path (130).

10. A computer program product comprising program code instructions that can be loaded in a programmable device for implementing the method according to any one of claims 1 to 9, when the program code instructions are run by the programmable device.

11. A non-transitory information storage medium storing a computer program comprising program code instructions that can be loaded in a programmable device for implementing the method according to any one of claims 1 to 9, when the program code instructions are run by the programmable device.

12. A server (120) implementing an automatic remote control of a moving conveyance (140) travelling on a predefined path (130), the moving conveyance (140) including an on-board wireless radio unit (160) and an image-capturing device (170) installed on the moving conveyance (140) so as to capture images of the predefined path (130) ahead the moving conveyance (140), wherein the server (120) implements:

- means for receiving (S301) from the on-board wireless radio unit images captured by the image-capturing device;
- means for analyzing (S302) the received images so as to detect presence of obstacle ahead the moving conveyance (140) on the predefined path (130); and
- means for instructing (S304) the on-board wireless radio unit (160) to stop the moving conveyance (140) in case of obstacle presence detection;

**characterized in that** the server (120) further implements:

- means for determining (S402) a distance Dfov from each received image, wherein Dfov represents a distance ahead considered as clear from any obstacle presence ; and
- means for increasing (S404) quantity of uplink transmission resources allocated for allowing the on-board wireless radio unit (160) to transmit the images toward the server (120), when a decrease of said distance Dfov is determined.

**Patentansprüche**

1. Verfahren zur automatischen Fernsteuerung eines in Bewegung befindlichen Beförderungsmittels (140), das sich auf einem vordefinierten Weg (130) bewegt, wobei das in Bewegung befindliche Beförderungsmittel (140) eine drahtlose Bord-Funkeinheit (160) und eine Bildaufnahmevorrichtung (170) enthält, die auf dem in Bewegung befindlichen Beförderungsmittel (140) installiert ist, um Bilder des vordefinierten Weges (130) vor dem in Bewegung befindlichen Beförderungsmittel (140) aufzunehmen, wobei ein das in Bewegung befindliche Beförderungsmittel (140) fernsteuernder Server (120) folgende Schritte ausführt:

- Empfangen (S301) von durch die Bildaufnahmevorrichtung (170) aufgenommenen Bildern von der drahtlosen Bord-Funkeinheit (160);
- Analysieren (S302) der empfangenen Bilder zur Erkennung des Vorhandenseins eines Hindernisses vor dem in Bewegung befindlichen Beförderungsmittel (140) auf dem vordefinierten Weg (130); und
- Anweisen (S304) der drahtlosen Bord-Funkeinheit (160) zum Anhalten des in Bewegung befindlichen Beförderungsmittels (140) bei Erkennung eines Hindernisses;

**dadurch gekennzeichnet, dass** der Server (120) des Weiteren für jedes empfangene Bild folgende Schritte ausführt:

- Bestimmen (S402) eines Abstands Dfov anhand des empfangenen Bilds, wobei Dfov für einen als frei von Hindernissen eingestuften Abstand nach vorne steht; und
- Erhöhen (S404) der zugewiesenen Menge an Uplink-Übertragungsressourcen, um der drahtlosen Bord-Funkeinheit (160) bei Feststellung einer Verringerung des Abstands Dfov die Übertragung der Bilder an den Server (120) zu ermöglichen.

2. Verfahren nach Anspruch 1, bei dem der Server (120) die Menge der zugewiesenen Uplink-Übertragungsressourcen erhöht, um der drahtlosen Bord-Funkeinheit (160) eine Übertragung der Bilder an den Server (120) zu ermöglichen, indem er zusätzliche Uplink-Übertragungsressourcen aus einem Pool von Uplink-Übertragungsressourcen abruft, wobei der Pool von Uplink-Übertragungsressourcen von drahtlosen Bord-Funkeinheiten (160) gemeinsam genutzt wird, die in entsprechenden in Bewegung befindlichen Beförderungsmitteln enthalten sind, die von dem Server (120) verwaltet werden und in derselben Funkabdeckung fahren.

3. Verfahren nach Anspruch 1 oder 2, bei dem der Server (120) die drahtlose Bord-Funkeinheit (160) anweist (S407), die Geschwindigkeit des in Bewegung befindlichen Beförderungsmittels (140) zu verringern, wenn vom Server (120) keine Erhöhung der Menge der Uplink-Übertragungsressourcen erfolgt.

4. Verfahren nach Anspruch 1 bis 3, bei dem die drahtlose Bord-Funkeinheit (160) die tatsächliche Geschwindigkeit S des in Bewegung befindlichen Beförderungsmittels (140) als Ergänzung zu den aufgenommenen Bildern an den Server (120) überträgt, wobei der Server (120) die Menge an Uplink-Übertragungsressourcen zuweist, um der drahtlosen Bord-Funkeinheit (160) eine Übertragung der Bilder an den Server (120) zu ermöglichen, um folgende Beziehung zu erfüllen:

$$Tul < ((Dfov - Dstop) / S) - Tic - Tproc - Tdl$$

wobei Tul eine Zeitspanne zur Übertragung eines solchen Bilds von der drahtlosen Bord-Funkeinheit (160) an den Server (120) darstellt, Dstop ein Abstand zum Anhalten des in Bewegung befindlichen Beförderungsmittels (140) unter Berücksichtigung seiner tatsächlichen Geschwindigkeit S ist, Tic eine feste Zeitspanne zwischen aufeinanderfolgenden Aufnahmen von Bildern durch die Bildaufnahmevorrichtung (170) darstellt, Tproc eine nach oben begrenzte Zeitspanne ist, in der der Server (120) ein Bild verarbeitet, um das Vorhandensein eines Hindernisses zu erkennen, und Tdl eine nach oben begrenzte Zeitspanne für die Übermittlung der Befehlsnachricht vom Server (120) an die drahtlose Bord-Funkeinheit (160) ist.

5. Verfahren nach Anspruch 4, bei dem der Server (120) des Weiteren folgenden Schritt ausführt:

- Verringern der Menge an zugewiesenen Uplink-Übertragungsressourcen, um der drahtlosen Bord-Funkeinheit (160) bei Erkennung einer Erhöhung des Abstands Dfov eine Übertragung der Bilder an den Server (120) zu ermöglichen, unter der Bedingung, dass die Beziehung:

$$Tul < ((Dfov - Dstop) / S) - Tic - Tproc - Tdl$$

weiterhin erfüllt bleibt.

6. Verfahren nach Anspruch 4 oder 5, bei dem durch den Server (120) eine Auswertung des Abstands Dstop unter Berücksichtigung der aktuellen Geschwindigkeit S des in Bewegung befindlichen Beförderungsmittels (140) unter Verwendung eines in einer Datenbank (150) gespeicherten Bremsmodells erfolgt.

7. Verfahren nach einem der Ansprüche 1 bis 6, bei dem die drahtlose Bord-Funkeinheit (160) an den Server (120) die tatsächliche Position des in Bewegung befindlichen Beförderungsmittels (140) als Ergänzung zu den aufgenommenen Bildern überträgt, wobei der Abstand Dfov von vordefinierten Merkmalen der von der Bildaufnahmevorrichtung (170) eingesetzten Bildaufnahmetechnik und ferner von den tatsächlichen Wetterbedingungen an der Position des in Bewegung befindlichen Beförderungsmittels (140) abhängt.

8. Verfahren nach Anspruch 7, bei dem der Server Angaben zu den aktuellen Wetterbedingungen von einem Wetterüberwachungs- und -vorhersagedienst oder über die drahtlose Bord-Funkeinheit (160) von einer an Bord des in Bewegung befindlichen Beförderungsmittels (140) installierten Wetterüberwachungsstation erhält.

9. Verfahren nach einem der Ansprüche 1 bis 8, bei dem die drahtlose Bord-Funkeinheit (160) an den Server (120) die tatsächliche Position des in Bewegung befindlichen Beförderungsmittels (140) als Ergänzung zu den aufgenommenen Bildern überträgt, wobei der Abstand Dfov von vordefinierten Eigenschaften der von der Bildaufnahmevorrichtung (170) eingesetzten Bildaufnahmetechnik abhängt, und ferner von Trajektorieninformationen über den vordefinierten Weg (130) für einen Abschnitt davon vor dem in Bewegung befindlichen Beförderungsmittel (140) abhängt, und wobei der Server (120) Angaben über die Trajektorie des vordefinierten Wegs (130) vor dem in Bewegung befindlichen Beförderungsmittel durch Abfragen einer Datenbank (150) erhält, in der eine Beschreibung des vordefinierten Wegs (130) gespeichert ist.

10. Computerprogrammprodukt mit Programmcode-Anweisungen, die in ein programmierbares Gerät geladen werden können, um bei Ausführung der Programmcode-Anweisungen von dem programmierbaren Gerät das Verfahren nach einem der Ansprüche 1 bis 9 durchzuführen.

11. Nicht-transitorisches Informationsspeichermedium, in dem ein Computerprogramm mit Programmcode-Anweisungen gespeichert ist, welche in eine programmierbare Vorrichtung geladen werden können, um bei Ausführung der Programmcode-Anweisungen von dem programmierbaren Gerät das Verfahren nach einem der Ansprüche 1 bis 9 durchzuführen.

12. Server (120), der eine automatische Fernsteuerung eines in Bewegung befindlichen Beförderungsmittels (140) implementiert, das sich auf einem vordefinierten Weg (130) bewegt, wobei das in Bewegung befindliche Beförderungsmittel (140) eine drahtlose Bord-Funkeinheit (160) und eine Bildaufnahmevorrichtung (170) enthält, die auf dem in Bewegung befindlichen Beförderungsmittel (140) installiert ist, um Bilder des vordefinierten Weges (130) vor dem in Bewegung befindlichen Beförderungsmittel (140) aufzunehmen, wobei der Server (120) folgendes implementiert:

- Mittel zum Empfangen (S301) von durch die Bildaufnahmevorrichtung aufgenommenen Bildern von der drahtlosen Bord-Funkeinheit;
- Mittel zum Analysieren (S302) der empfangenen Bilder zum Erkennen des Vorhandenseins eines Hindernisses vor dem in Bewegung befindlichen Beförderungsmittel (140) auf dem vordefinierten Weg (130); und
- Mittel zum Anweisen (S304) der drahtlosen Bord-Funkeinheit (160), das in Bewegung befindliche Beförderungsmittel (140) bei Erkennung der Anwesenheit eines Hindernisses anzuhalten;

**dadurch gekennzeichnet, dass** der Server (120) des Weiteren folgendes implementiert:

- Mittel zum Bestimmen (S402) eines Abstands Dfov anhand jedes empfangenen Bilds, wobei Dfov einen Abstand nach vorne darstellt, der als frei von jeglichem Vorhandensein eines Hindernisses betrachtet wird; und
- Mittel zum Erhöhen (S404) der zugewiesenen Menge an Uplink-Übertragungsressourcen, um der drahtlosen Bord-Funkeinheit (160) bei Feststellung einer Verringerung des Abstands Dfov eine Übertragung der an den Server (120) zu ermöglichen.

## Revendications

1. Procédé de commande à distance automatique d'un moyen de transport mobile (140) se déplaçant sur un trajet prédéfini (130), le moyen de transport mobile (140) comprenant une unité radio sans fil embarquée (160) et un dispositif de capture d'image (170) installé sur le moyen de transport mobile (140) afin de capturer des images du trajet prédéfini (130) en avant du moyen de transport mobile (140), un serveur (120) commandant à distance le moyen de transport mobile (140) effectuant les étapes suivantes :

- recevoir (S301), en provenance de l'unité radio sans fil embarquée (160), des images capturées par le dispositif de capture d'image (170) ;
- analyser (S302) les images reçues afin de détecter la présence d'un obstacle en avant du moyen de transport mobile (140) sur le trajet prédéfini (130) ; et
- donner l'instruction (S304) à l'unité radio sans fil embarquée (160) d'arrêter le moyen de transport mobile (140) en cas de détection de présence d'obstacle ;

le procédé étant **caractérisé en ce que** le serveur (120) effectue en outre, pour chaque image reçue, les étapes suivantes :

- déterminer (S402) une distance Dfov à partir de l'image reçue, Dfov représentant une distance vers l'avant considérée comme libre de toute présence d'obstacle ; et
- augmenter (S404) le nombre de ressources d'émission en liaison montante allouées pour permettre à l'unité radio sans fil embarquée (160) d'émettre les images vers le serveur (120), lorsqu'une diminution de ladite distance Dfov est déterminée.

2. Procédé selon la revendication 1, dans lequel le serveur (120) augmente le nombre de ressources d'émission en liaison montante allouées pour permettre à l'unité radio sans fil embarquée (160) d'émettre les images vers le serveur (120), en demandant des ressources d'émission en liaison montante supplémentaires auprès d'un groupe de ressources d'émission en liaison montante, le groupe de ressources d'émission en liaison montante étant partagé par des unités radio sans fil embarquées (160) comprises dans des moyens de transport mobiles respectifs gérés par le serveur (120) et se déplaçant dans la même couverture radio.

3. Procédé selon la revendication 1 ou 2, dans lequel le serveur (120) donne l'instruction (S407) à l'unité radio sans fil embarquée (160) de réduire une vitesse du moyen de transport mobile (140) lorsque le serveur (120) échoue à augmenter le nombre de ressources d'émission en liaison montante.

4. Procédé selon la revendication 1 à 3, dans lequel l'unité radio sans fil embarquée (160) émet la vitesse réelle S du moyen de transport mobile (140) vers le serveur (120) en complément des images capturées, le serveur (120) attribuant le nombre de ressources d'émission en liaison montante pour permettre à l'unité radio sans fil embarquée (160) d'émettre les images vers le serveur (120) de manière à respecter la relation suivante :

$$Tul < ((Dfov - Dstop) / S) - Tic - Tproc - Tdl,$$

où Tul est une période d'émission d'une desdites images depuis l'unité radio sans fil embarquée (160) vers le serveur (120), Dstop est une distance d'arrêt du moyen de transport mobile (140) en fonction de sa vitesse réelle S, Tic est une période fixe entre des captures successives d'images par le dispositif de capture d'image (170), Tproc est une période supérieure délimitée pour le traitement d'une image par le serveur (120) afin de détecter une présence d'obstacle, et Tdl est une période supérieure délimitée pour l'émission d'un message d'instructions depuis le serveur (120) vers l'unité radio sans fil embarquée (160).

5. Procédé selon la revendication 4, dans lequel le serveur (120) effectue en outre les étapes suivantes :

- diminuer le nombre de ressources d'émission en liaison montante allouées pour permettre à l'unité radio sans fil embarquée (160) d'émettre les images vers le serveur (120), lorsqu'une augmentation de la distance Dfov est déterminée, sous une contrainte que la relation :

$$Tul < ((Dfov - Dstop) / S) - Tic - Tproc - Tdl$$

soit toujours remplie.

6. Procédé selon la revendication 4 ou 5, dans lequel le serveur (120) évalue la distance Dstop compte tenu de la vitesse réelle S du moyen de transport mobile (140) au moyen d'un modèle de freinage stocké dans une base de données (150).

7. Procédé selon l'une quelconque des revendications 1 à 6, dans lequel l'unité radio sans fil embarquée (160) émet vers le serveur (120) la position réelle du moyen de transport mobile (140) en complément des images capturées, la distance Dfov dépendant de caractéristiques prédéfinies de la technologie de capture d'image mise en oeuvre par le dispositif de capture d'image (170), et en outre des conditions météorologiques réelles à ladite position du moyen de transport mobile (140).

8. Procédé selon la revendication 7, dans lequel le serveur obtient des indications sur les conditions météorologiques réelles auprès d'un service de surveillance et de prévision météorologiques ou, par l'intermédiaire de l'unité radio sans fil embarquée (160), auprès d'une station de surveillance météorologique installée à bord du moyen de transport mobile (140).

9. Procédé selon l'une quelconque des revendications 1 à 8, dans lequel l'unité radio sans fil embarquée (160) émet vers le serveur (120) la position réelle du moyen de transport mobile (140) en complément des images capturées, la distance Dfov dépendant de caractéristiques prédéfinies de la technologie de capture d'image mise en oeuvre par le dispositif de capture d'image (170), et en outre d'informations de trajectoire sur le trajet prédéfini (130) pour une partie de celui-ci en avant du moyen de transport mobile (140), et le serveur (120) obtenant des indications sur la trajectoire du trajet prédéfini (130) en avant du moyen de transport mobile en interrogeant une base de données (150) stockant une description du trajet prédéfini (130).

10. Produit-programme informatique comprenant des instructions de code de programme qui peuvent être chargées dans un dispositif programmable pour mettre en oeuvre le procédé selon l'une quelconque des revendications 1 à 9, lorsque les instructions de code de programme sont exécutées par le dispositif programmable.

11. Support non transitoire de stockage d'informations, stockant un programme informatique comprenant des instructions de code de programme qui peuvent être chargées dans un dispositif programmable pour mettre en oeuvre le procédé selon l'une quelconque des revendications 1 à 9, lorsque les instructions de code de programme sont exécutées par le dispositif programmable.

12. Serveur (120) mettant en oeuvre une commande à distance automatique d'un moyen de transport mobile (140) se déplaçant sur un trajet prédéfini (130), le moyen de transport mobile (140) comprenant une unité radio sans fil embarquée (160) et un dispositif de capture d'image (170) installé sur le moyen de transport mobile (140) afin de capturer des images du trajet prédéfini (130) en avant du moyen de transport mobile (140), le serveur (120) mettant en oeuvre :

- un moyen permettant de recevoir (S301), en provenance de l'unité radio sans fil embarquée, des images capturées par le dispositif de capture d'image ;
- un moyen permettant d'analyser (S302) les images reçues afin de détecter la présence d'un obstacle en avant du moyen de transport mobile (140) sur le trajet prédéfini (130) ; et
- un moyen permettant de donner l'instruction (S304) à l'unité radio sans fil embarquée (160) d'arrêter le moyen de transport mobile (140) en cas de détection de présence d'obstacle ;

le serveur (120) étant **caractérisé en ce qu'**il met en oeuvre en outre :

- un moyen permettant de déterminer (S402) une distance Dfov à partir de chaque image reçue, Dfov représentant une distance vers l'avant considérée comme libre de toute présence d'obstacle ; et
- un moyen permettant d'augmenter (S404) le nombre de ressources d'émission en liaison montante allouées pour permettre à l'unité radio sans fil embarquée (160) d'émettre les images vers le serveur (120), lorsqu'une diminution de ladite distance Dfov est déterminée.

Fig. 1A

Fig. 1B

```
┌─────────────────────────────────┐
│      Detecting trigger          │～ S201
└─────────────────────────────────┘
               │
               ▼
┌─────────────────────────────────┐
│       Capturing data            │～ S202
└─────────────────────────────────┘
               │
               ▼
┌─────────────────────────────────┐
│    Transmitting captured data   │～ S203
└─────────────────────────────────┘
               │
               ▼
┌─────────────────────────────────┐
│       Waiting response          │～ S204
└─────────────────────────────────┘
               │
               ▼
```

S207

┌──────────┐        yes ╱───────────╲
│   Exit   │ ◄───────── │    OK?     │ ～ S205
└──────────┘            ╲───────────╱
                             │ no
                             ▼
┌─────────────────────────────────┐
│  Processing instructions to stop │～ S206
└─────────────────────────────────┘

## Fig. 2

```
┌─────────────────────────────────┐
│        Receiving data           │～ S301
└─────────────────────────────────┘
               │
               ▼
┌─────────────────────────────────┐
│        Processing data          │～ S302
└─────────────────────────────────┘
               │
               ▼
```

yes ╱───────────╲ no
 ┌──── │ Obstacle?  │ ────┐
 │     ╲───────────╱      │
 │          S303          │
 ▼                        ▼
S304                    S305
┌──────────────┐   ┌──────────────┐
│ Response Stop│   │ Response OK  │
└──────────────┘   └──────────────┘

## Fig. 3

Analysing field of view conditions — S401

Determining Dfov — S402

no ← Dfov changed? → yes
S403

Adapting UL resources allocation for next image(s) — S404

yes ← OK? → no
S405

S406
Notifying UL resources allocation change

S407
Transmitting slow-down instructions

Fig. 4

CPU
501

RAM
502

ROM
503

500

SD
504

COM
505

510

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015092558 A1
- US 20040117073 A1

**Non-patent literature cited in the description**

- **JOSEPH REDMON et al.** You Only Look Once: Unified, Real-Time Object Detection. *IEEE Conference on Computer Vision and Pattern Recognition (CVPR),* 2016